# EUROPÄISCHE PATENTSCHRIFT

(11) **EP 0 835 905 B1**
(45) Veröffentlichungstag und Bekanntmachung des Hinweises auf die Patenterteilung: **16.01.2002**
(21) Anmeldenummer: 97117430.5
(22) Anmeldetag: 09.10.1997
(51) Int. Cl.: C08K 5/3492, C08G 18/38, C08L 75/08, C08J 3/20

(54) **Verfahren zur Herstellung einer stabilen Dispersion von Melamin in Polyolkomponenten**
Process for manufacturing a stable dispersion of melamine in polyolic components
Procédé pour la production d'une dispersion stabile de mélamine en composants polyoliques

(30) Priorität: 12.10.1996 DE 19642246
(43) Veröffentlichungstag der Anmeldung: 15.04.1998
(73) Patentinhaber: BASF AKTIENGESELLSCHAFT, 67056 Ludwigshafen (DE)
(72) Erfinder: Falke, Peter, Dr., 01987 Schwarzheide (DE); Hendreich, Regina, 01945 Frauendorf (DE); Reichelt, Michael, 01945 Ruhland (DE)

(56) Entgegenhaltungen:
- EP-A- 0 358 427
- EP-A- 0 397 035

## Beschreibung

Die Erfindung betrifft ein Verfahren zur Herstellung einer stabilen Dispersion von Melamin in Polyolkomponenten, wobei das Melamin in Verbindung mit mindestens einem Amin sowie mindestens einem organischen und/oder modifizierten organischen Isocyanat eingesetzt wird, eine entsprechende stabile Melamindispersion sowie ein Verfahren zur Herstellung flammgeschützter Polyurethanschaumstoffe.

Die Herstellung von Polyurethanschaumstoffen durch Umsetzung von organischen und/oder modifizierten organischen Polyisocyanaten bzw. Prepolymeren mit höherfunktionellen Verbindungen mit mindestens zwei reaktiven Wasserstoffatomen, beispielsweise Polyoxyalkylenpolyaminen und/oder vorzugsweise organischen Polyhydroxylverbindungen, insbesondere Polyetherolen mit Molekulargewichten von z.B. 300 bis 6000, und gegebenenfalls Kettenverlängerungs- und/oder Vernetzungsmitteln mit Molekulargewichten bis ca. 400 in Gegenwart von Katalysatoren, Treibmitteln, Flammschutzmitteln, Hilfsmitteln und/oder Zusatzstoffen ist bekannt und wurde vielfach beschrieben. Eine zusammenfassende Übersicht über die Herstellung von Polyurethanschaumstoffen wird z.B. im Kunststoff-Handbuch, Band VII, "Polyurethane", 1. Auflage, 1966, herausgegeben von Dr. R. Vieweg und Dr. A. Höchtlen sowie 2. Auflage, 1983, und 3. Auflage, 1993, jeweils herausgegeben von Dr. G. Oertel, (Carl Hanser Verlag, München) gegeben.

Für zahlreiche Anwendungsgebiete ist es häufig erforderlich, Polyurethanschäume mit Flammschutzmitteln zu versehen, um eine Brandgefahr derartiger Werkstoffe zu minimieren. Neben hinlänglich bekannten halogenhaltigen Flammschutzmitteln, die insbesondere aus ökologischen Gründen unerwünscht sind, ist Melamin insbesondere bei Weichschaumstoffen ein hervorragend geeignetes und in breitem Maße eingesetztes Flammschutzmittel. Von Nachteil ist dabei allerdings die Tatsache, daß die melaminhaltigen Polyurethan-Komponenten innerhalb kurzer Zeit zum Absetzen des Melamins neigen, was eine Reihe von technologischen Problemen mit sich bringt.

Der Einsatz von Melamin als Flammschutzmittel ist in zahlreichen Schriften beschrieben (US-A-4745133, EP-A-0351089, BE 903147). In all diesen Anwendungen ist es erforderlich, angefertigte Dispersionen von Melamin unmittelbar nach der Herstellung zu verarbeiten, da die Dispersionen nicht lagerstabil sind und zum Absetzen neigen.

Es hat deshalb in der Vergangenheit nicht an Versuchen gefehlt, lagerstabile Melamindispersionen herzustellen. So wurde, wie in DD-A-288828 beschrieben, versucht, Melamin zu alkoxylieren, um das so modifizierte Melamin am Absetzen zu hindern. Dieser Verfahrensschritt ist aufwendig, vermindert das Absetzen nur kurzfristig und modifiziert die Melaminstruktur derartig, daß die Flammschutzeigenschaften stark verschlechtert werden.

In WO 93/07193 setzt man Melamin einem Polymerpolyol zu. Unter Zuhilfenahme eines Kieselsäurepräparates und eines Dispersionsmittels soll eine bis zu 12 Wochen lagerstabile Dispersion erhalten werden. Dabei ist zu berücksichtigen, daß derartige Aerosilpräparate die Schaumstruktur unangenehm beeinflussen können.

In EP-A-0531850 sollen polyfunktionelle Acetoessigsäurederivate das Absetzen der Melamindispersion verhindern. Als Vorzug wird eine Schichtenausbildung in der A-Komponente genannt, die erneut verrührbar sein soll.

In US-A-5125952 werden aus der Lackindustrie bekannte Verdicker, wie z.B. Cellulosederivate, verwendet, um ein Absetzen des Melamins zu verhindern. Derartige Zusätze beeinflussen Viskosität und Schaumstruktur ungünstig.

Nach EP-A-0391116 soll durch Zusatz von Harnstoff-, Thioharnstoff- und Biuretderivaten, wobei das Melamin im Polyetherol mit diesen Zusätzen gemeinsam verrührt wird, eine lagerstabile Dispersion erzeugt werden. Gegenüber den in EP-A-0422797 beispielhaft aufgeführten Polyharnstoffpolyolen, die dispergierte Harnstoffteilchen - teilweise am Polyol angepfropft - enthalten, erfolgt hier der Zusatz der Harnstoffe durch die separate Zumischung.

In EP-A-0439719 werden Cyanursäurederivate zum Stabilisieren von Melamindispersionen verwendet. Dabei wird die Dispersion von Melamin in einem Polyetherol beansprucht. Es ist hingegen bekannt, daß insbesondere Wasseranteile in der Komponente die Stabilität der Dispersion äußerst ungünstig beeinflussen.

In DE-A-2932304 wird feinstgemahlenes Melamin eingesetzt, um das Absetzverhalten positiv zu beeinflussen. Säurezusätze, wie z.B. Alkylsulfonsäuren, wirken in diesem Zusammenhang positiv.

Kageoka, Kodama und Tairaka (Polyurethan 1995, SPi Chikago, S.62ff) bestätigen, daß eine Verwendung von feingemahlenem Melamin (durchschnittliche Korngröße 5 µm) auch ohne Zusatzmittel eine stabile Dispersion von Melamin in einem Polyol erzeugt. Dies gelingt nicht mit einem Melamin im Korngrößenbereich von 10 bis 50 µm. Nachteilig an dieser Verfahrensweise sind die hohen Konfektionierungskosten eines derartigen Melamins.

In EP-A-0358427 wird die Erzeugung von Polymerpolyolen (PHD, PIPA, Graft) in Gegenwart von feingemahlenem Melamin (90 % der Partikel mit einer Korngröße < 15 µm) beansprucht. Dieses so zugesetzte Melamin beeinflußt den Prozeß der Erzeugung von Polymerpolyol nicht nachteilig und soll zu einem verbesserten Lagerverhalten führen.

Im Falle der Erzeugung von PHD-Polyolen beinhaltet dieser Syntheseschritt die Vorlage von entsprechenden Amin- bzw. Hydrazinderivaten in Anwesenheit von Melamin, die nachfolgend mit dem Isocyanat in an sich bekannter Weise zu einem PHD-Polyol mit Melaminanteilen umgesetzt werden.

Bei der Erzeugung von PIPA-Polyolen in Anwesenheit von Melamin werden anstelle der Amin- bzw. Hydrazinderivate Alkanolamine verwendet.

In EP-A-0422797 wird die Herstellung einer lagerstabilen Melamindispersion in einem Isocyanat bzw. NCO-Prepolymeren beschrieben. Dazu wird das Melamin in die Isocyanatkomponente gegeben und durch Zugabe von Aminbestandteilen im Isocyanat eine Harnstoffdispersion erzeugt. Von Nachteil ist die relativ hohe Viskosität dieser Dispersionen.

Die Aufgabe der Erfindung bestand darin, ein Verfahren zur Herstellung von flammfesten Polyurethanschaumstoffen zu entwickeln, bei dem als Flammschutzmittel Melamin eingesetzt wird und das Melamin stabil in der Polyolkomponente dispergiert ist, ohne daß es durch die Art der Dispergierung zu Nachteilen bei der Verarbeitung des Schaumsystems und den Schaumeigenschaften kommt.

Erfindungsgemäß wurde die Aufgabe dadurch gelöst, daß als Flammschutzmittel eine Dispersion von Melamin in Verbindung mit mindestens einem Amin sowie mindestens einem organischen und/oder modifizierten organischen Isocyanat in der Polyolkomponentem definierten Anteilen eingesetzt wird.

Wir fanden bei unseren Untersuchungen überraschenderweise, daß lagerstabile Melamindisperisonen in Polyolkomponenten erhalten werden, wenn diese mit speziellen Aminderivaten, insbesondere primären Aminen, versetzt werden und diese Mischung mit einer geringen Isocyanatmenge zur Reaktion gebracht wird. Die sich dabei ausbildenden Spezies verhindern wirkungsvoll ein Absetzen des Melamins, wobei eine Viskositätserhöhung in der polyolischen Komponente zu verzeichnen ist. Da nur geringe Harnstoffanteile erzeugt werden, kommt es bei der Dispersionsherstellung zu keiner Temperaturerhöhung.

Gegenstände der Erfindung sind demzufolge ein Verfahren zur Herstellung einer stabilen Dispersion von Melamin in Polyolkomponenten, bestehend aus mindestens einer höhermolekularen Verbindung mit mindestens zwei reaktiven Wasserstoffatomen und gegebenenfalls niedermolekularen Kettenverlängerungs- und/oder Vernetzungsmitteln, Treibmitteln, Katalysatoren, Flammschutzmitteln sowie weiteren Hilfsmitteln und/oder Zusatzstoffen, das dadurch gekennzeichnet ist, daß als Flammschutzmittel Melamin mit einer durchschnittlichen Korngröße von 1 bis 100 µm und einer Korngrößenverteilung, bei der mindestens 70 Gew.-% der Teilchen eine Korngröße von mehr als 16 µm aufweisen, in Verbindung mit mindestens einem Amin in Anteilen von 0,05 bis 2 Gew.-% sowie mindestens einem organischen und/oder modifizierten organischen Isocyanat in Anteilen von 0,05 bis 2 Gew.-%, jeweils bezogen auf das Gewicht der Polyolkomponente, eingesetzt wird, sowie entsprechende stabile Melamindispersionen.

Gegenstände der Erfindung sind weiterhin ein Verfahren zur Herstellung flammgeschützter Polyurethanschaumstoffe durch Umsetzung von
a) organischen und/oder modifizierten organischen Isocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Treibmitteln,
e) Katalysatoren,
f) Flammschutzmitteln sowie gegebenenfalls
g) weiteren Hilfsmitteln und/oder Zusatzstoffen,
dadurch gekennzeichnet, daß als Flammschutzmittel Melamin als stabile Dispersion, herstellbar nach dem beschriebenen Verfahren, eingesetzt wird, sowie die Verwendung der so hergestellten Polyurethanschaumstoffe als Weichschaum für Polsterzwecke im Möbel- und Automobilbereich als Dichtungsmaterial im Bauwesen bzw. als Be standteil von Integralschaumstoffen.

Die stabile Dispersion von Melamin in Polyolkomponenten wird erfindungsgemäß erzeugt, indem den Bestandteilen der Polyolkomponente, bestehend aus mindestens einer höhermolekularen Verbindung mit mindestens zwei reaktiven Wasserstoffatomen (b), Melamin und gegebenenfalls niedermolekularen Kettenverlängerungs- und/oder Vernetzungsmitteln (c), Treibmitteln (d), Katalysatoren (e), weiteren Flammschutzmitteln (f) sowie weiteren Hilfsmitteln und/oder Zusatzstoffen (g), geringe Anteile an speziellen Aminderivaten zugesetzt werden. Diese Mischung wird innig verrührt. Dazu gibt man eine geringe Menge eines Isocyanates und verrührt die ganze Mischung. In einer vorteilhaften Ausführungsform wird nach Zugabe der Isocyanate etwa 20 Minuten bei Raumtemperatur intensiv gerührt.

Es ist auch möglich, das eingesetzte Isocyanat vor der Dispersionsherstellung mit einem Teil des Basispolyethers zu verrühren und dann der melaminhaltigen polyolischen Komponente unter Rühren zuzusetzen.

Ebenso ist es möglich, die melaminhaltige Polyolkomponente, der erfindungsgemäß ein geeignetes Amin zugesetzt wurde, mit der isocyanathaltigen Komponente über eine Mischdüse zu vermischen.

Wird als Treibmittel Wasser verwendet, hat es sich als günstig erwiesen, dieses nicht bei der Herstellung der Dispersion, sondern erst später, bei der Konfektionierung der A-Komponente, der Polyolkomponente hinzuzufügen. Ebenso können weitere Systembestandteile der polyolischen Komponente auch nachträglich zugesetzt werden.

Das erfindungsgemäß als Flammschutzmittel eingesetzte Melamin kann in handelsüblicher Form eingesetzt werden. Üblicherweise weisen diese Produkte folgende Korngrößenverteilung auf:
10 Gew.-% der Teilchen sind größer als 30 µm
30 Gew.-% der Teilchen sind größer als 24 µm
50 Gew.-% der Teilchen sind größer als 20 µm
70 Gew.-% der Teilchen sind größer als 16 µm
90 Gew.-% der Teilchen sind größer als 11 µm

Besonders bewährt hat sich und daher vorzugsweise eingesetzt wird Melamin mit einer durchschnittlichen Korngröße von 1 bis 100 µm, insbesondere von 10 bis 50 µm, und einem Schüttgewicht von 300 bis 800 g/Liter, insbesondere von 500 bis 650 g/Liter. Der Melaminanteil in der Polyolkomponente beträgt zweckmäßigerweise 1 bis 50 Gew.-%, vorzugsweise 3 bis 25 Gew.-%.

Erfindungsgemäß werden als Amine vorzugsweise primäre und/oder sekundäre Amine, besonders bevorzugt primäre Amine, eingesetzt. Diese Amine sollten mehrfunktionell sein, können aber auch Anteile an monofunktionellen Aminen enthalten. Dabei kommen vorzugsweise aliphatische und/oder cycloaliphatische Amine zur Anwendung. Die Aminderivate können weitere funktionelle Gruppen wie -OH oder -SH aufweisen. Ebenso können Anteile von Alkanolaminen und Amingemische eingesetzt werden.

Beispielhaft seien aufgeführt: Hexamethylendiamin, Ethylendiamin, 4,4'-Methylenbiscyclohexylamin, Diethyltoluylendiamin, Methylenbisdianilin, NH₂-Gruppen tragende Polyole wie z.B. Jeffamintypen, 3,3'-Imidopropylamin, Fettamine, Diethylentriamin, Triethylentetramin, Propylendiamine, Butylendiamine, Diethanolamin und Ethanolamin.

Desweiteren ist erfindungsgemäß auch der Einsatz von in der Polyurethanchemie üblichen aromatischen Aminen möglich, wie beispielsweise Toluylendiaminen, insbesondere Diethyltoluylendiamin, oder Aminen der Diphenylmethanreihe.

Vorzugsweise werden 2,2'-Dimethyl-4,4'-methylenbiscyclohexylamin, Cocosfettamin und N-Oleylpropylendiamin eingesetzt.

Die Amine kommen in Anteilen von 0,05 bis 2,0 Gew.-%, bezogen auf das Gewicht der Polyolkomponente, zum Einsatz.

Der melaminhaltigen polyolischen Komponente, der das entsprechende primäre oder sekundäre Amin zugesetzt wurde, wird nun unter Rühren oder einer anderen geeigneten Technik des Vermischens mindestens ein organisches und/oder modifiziertes organisches Isocyanat zugemischt. Hierzu sind prinzipiell alle weiter unten als Komponente (a) aufgeführten Isocyanate verwendbar. Vorzugsweise werden jedoch aromatische Isocyanate eingesetzt. Insbesondere bevorzugt sind 2,4- und 2,6-Toluylendiisocyanate, 4,4'- und 2,2'-Diphenylmethandiisocyanate, Polyphenylpolymethylenpolyisocyanate und NCO-Gruppen enthaltende Prepolymere sowie Mischungen aus diesen Verbindungen.

Die organischen und/oder modifizierten organischen Isocyanate werden dabei in Anteilen von 0,05 bis 2,0 Gew.-%, bezogen auf das Gewicht der Polyolkomponente, eingesetzt.

Besonders stabile Melamin enthaltende Polyolkomponenten werden erreicht, wenn 5 bis 25 Gew.-% Melamin, 0,5 bis 2,0 Gew.-% Amin und 0,5 bis 2,0 Gew.-% Isocyanat mit den übrigen Bestandteilen der Polyolkomponente verarbeitet werden.

Die nach Zugabe der organischen und/oder modifizierten organischen Isocyanate ablaufende Umsetzung macht sich in einem Viskositätsanstieg bemerkbar.

Bei der erfindungsgemäßen Herstellung der Melamindispersion kommt es in der Polyolkomponente nur zu einem sehr geringen Absetzen des Melamins. Die Polyolkomponente war mindestens drei Monate ohne oder mit sehr geringen Absetzungen von Melamin haltbar. Das sonst notwendige Aufrühren der Polyolkomponente vor der Verarbeitung war nicht erforderlich. Es traten auch keine Absetzungen von Melamin in den Fässern und Maschinenbehältern auf.

Die Herstellung der flammgeschützten Polyurethanschaumstoffe erfolgt in an sich bekannter Weise durch Umsetzung von
a) organischen und/oder modifizierten organischen Isocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
   in Gegenwart von
d) Treibmitteln,
e) Katalysatoren,
f) Flammschutzmitteln sowie gegebenenfalls
g) weiteren Hilfsmitteln und/oder Zusatzstoffen,
wobei - wie oben beschrieben - als Flammschutzmittel Melamin in Verbindung mit mindestens einem Amin sowie mindestens einem organischen und/oder modifizierten organischen Isocyanat eingesetzt wird. Das Melamin liegt dabei als stabile Dispersion in der Polyolkomponente, bestehend aus den Komponenten (b) und gegebenenfalls (c), (d), (e), weiteren Flammschutzmitteln (f) und (g) vor.

Zu den für das erfindungsgemäße Verfahren verwendbaren Ausgangskomponenten ist folgendes auszuführen:
a) Als organische und/oder modifizierte organische Isocyanate zur Herstellung der erfindungsgemäßen Polyurethane und zur Stabilisierung der Melaminanteile in der Polyolkomponente kommen die an sich bekannten aliphatischen, cycloaliphatischen araliphatischen und vorzugsweise aromatischen mehrwertigen Isocyanate in Frage.
   Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylen-diisocyanat-1,4 und vorzugsweise Hexamethylendiisocyanat-1,6; cycloaliphatische Diisocyanate wie Cyclohexan-1,3- und-1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische , Mischungen aus 4,4'- und 2,4'-Diphenylmethandiisocyanaten, Polyphenylpolymethylenpolyisocyanate, Mischungen aus 4,4'-, 2,4'- und 2,2'-Diphenyl-methandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.
   Häufig werden auch sogenannte modifizierte mehrwertige Isocyanate und Prepolymere, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di- und/oder Polyisocyanate. Im einzelnen kommen beispielsweise in Betracht:
   Urethangruppen enthaltende Prepolymere mit einem NCO-Gehalt von 14 bis 2,8 Gew.-%, vorzugsweise von 12 bis 3,5 Gew.-% oder Quasiprepolymere mit einem NCO-Gehalt von 45 bis 14 Gew.-%, vorzugsweise von 34 bis 22 Gew.-%, wobei mit Urethangruppen modifizierte Polyisocyanate aus Toluylendiisocyanaten, insbesondere einem NCO-Gehalt von 40 bis 28 Gew.-% und solche aus 4,4'-Diphenylmethandiisocyanat, 4,4'-und 2,4'-Diphenylmethandiisocyanat-Isomerenmischungen oder Roh-MDI, insbesondere einen NCO-Gehalt von 30 bis 14 Gew.-%, insbesondere bevorzugt von 28 bis 22 Gew.-%, bezogen auf das Gesamtgewicht, aufweisen und z.B. hergestellt werden durch Umsetzung von Diolen, Oxalkylenglykolen und/oder Polyoxyalkylenglykolen mit Molekulargewichten von 62 bis 6000, vorzugsweise von 134 bis 4200, mit Toluylendiisocyanaten, 4,4'-Diphenylmethandiisocyanat, Diphenylmethandiisocyanat-Isomerengemischen und/oder Roh-MDI, z.B. bei Temperaturen von 20 bis 110°C, vorzugsweise von 50 bis 90°C, wobei als Oxalkylen- und Polyoxyalkylenglykole, die einzeln oder als Gemische eingesetzt werden können, beispielhaft genannt seien: Diethylen-, Dipropylen-, Polyoxyethylen-, Polyoxypropylen- und Polyoxypropylen-polyoxyethylen-glykole, Carbodiimidgruppen und/oder Uretonimingruppen enthaltende Polyisocyanate, z.B. auf Diphenylmethandiisocyanat-Isomeren- und/ oder Toluylendiisocyanat-Basis. In Betracht kommen ferner Mischungen aus mit Urethangruppen modifiziertem 2,4-Toluylendiisocyanat oder 2,4- und 2,6-Toluylendiisocyanat-Mischungen und 4,4'-Diphenylmethandiisocyanat, Diphenylmethandiisocyanat-Isomerenmischungen und/oder Roh-MDI, Mischungen aus mit Urethangruppen modifiziertem 4,4'-Diphenylmethandiisocyanat, Diphenylmethandiisocyanat-Isomerenmischungen, vorzugsweise aus 4,4'- und 2,4'-Diphenylmethandiisocyanat, oder Roh-MDI und 2,4-Toluylendiisocyanat oder 2,4- und 2,6-Toluylendiisocyanat-Mischungen und Mischungen aus mit Urethangruppen modifiziertem 2,4-Toluylendiisocyanat oder 2,4- und 2,6-Toluylendiisocyanat-Mischungen und mit Urethangruppen modifiziertem 4,4'-Diphenylmethandiisocyanat, Diphenylmethandiisocyanat-Isomerenmischungen, vorzugsweise aus 4,4'- und 2,4'-Diphenylmethandiisocyanat, und/oder Roh-MDI, wobei zur Modifizierung des 4,4'-Diphenylmethandiisocyanat und der Polyisocyanatmischungen aus Toluylendiisocyanat, Diphenylmethandiisocyanat und Roh-MDI bevorzugt di- und/oder trifunktionelle Polyoxypropylen- und/oder Polyoxypropylen-polyoxyethylen-polyole mit Molekulargewichten von 134 bis 4200, vorzugsweise 1800 bis 4200, Verwendung finden.
   Besonders bewährt haben sich als organische Polyisocyanate und kommen daher vorzugsweise zur Anwendung: Mischungen aus Toluylendiisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solche auf Basis von Toluylendiisocyanaten, 4,4'-Diphenylmethandiisocyanat, Diphenylmethandiisocyanat-Isomerengemischen oder Roh-MDI und insbesondere Roh-MDI mit einem Diphenylmethandiisocyanat-Isomerengehalt von 30 bis 80 Gew.%, vorzugsweise von 30 bis 55 Gew.-%.
b) Als höhermolekulare Verbindungen mit mindestens zwei reaktiven Wasserstoffatomen werden zweckmäßigerweise solche mit einer Funktionalität von 2 bis 4, vorzugsweise 2 bis 3, und einem Molekulargewicht von 300 bis 8000, vorzugsweise von 300 bis 5000 verwendet.
   Bewährt haben sich z.B. Polyetherpolyamine und/oder vorzugsweise Polyole, ausgewählt aus der Gruppe der Polyetherpolyole, Polyesterpolyole, Polythioetherpolyole, Polyesteramide, hydroxylgruppenhaltigen Polyacetale und hydroxylgruppenhaltigen aliphatischen Polycarbonaten oder Mischungen aus mindestens zwei der genannten Polyole. Vorzugsweise Anwendung finden Polyesterpolyole und/oder Polyetherpolyole. Die Hydroxylzahl der Polyhydroxylverbindungen beträgt dabei in aller Regel 20 bis 80 und vorzugsweise 28 bis 56.
   Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydriden eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen und insbesondere Adipinsäure. Beispiele für zwei- und mehrwertige Alkohole, insbesondere Diole, sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.
   Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2, ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.
   Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1 : 1,05 bis 1,2, polykondensiert. Die erhaltenen Polyesterpolyole besitzen vorzugsweise eine Funktionalität von 2 bis 4, insbesondere 2 bis 3, und ein Molekulargewicht von 480 bis 3000, insbesondere 600 bis 2000.
   Insbesondere als Polyole verwendet werden jedoch Polyetherpolyole, die nach bekannten Verfahren, beispielsweise durch anionische Polymerisation mit Alkalihydroxiden, wie z.B. Natrium- oder Kaliumhydroxid, oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 4, vorzugsweise 2 bis 3, reaktive Wasserstoffatome gebunden enthält, oder durch kationische Polymerisation mit Lewisssäuren, wie Antimonpentachlorid, Borfluorid-Etherat u.a., oder Bleicherde, als Katalysatoren aus einem oder mehreren Alkylenoxiden mit 2 bis 4 Kohlenstoffatomen im Alkylenrest hergestellt werden.
   Für spezielle Einsatzzwecke können auch monofunktionelle Starter in den Polyetheraufbau eingebunden werden. Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.
   Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono- N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin, und Trialkanolamine, wie z.B. Triethanolamin und Ammoniak. Vorzugsweise verwendet werden mehrwertige, insbesondere zwei- und/oder dreiwertige Alkohole, wie Ethandiol, Propandiol-1,2 und -2,3, Diethylenglykol, Dipropylenglykol, Butandiol-1,4, Hexandiol-1,6, Glycerin, Trimethylolpropan und Pentaerythrit.
   Die Polyetherpolyole, vorzugsweise Polyoxypropylen- und Polyoxypropylenpolyoxyethylenpolyole, besitzen eine Funktionalität von vorzugsweise 2 bis 4 und insbesondere 2 bis 3 und Molekulargewichte von 300 bis 8000, vorzugsweise 300 bis 6000 und insbesondere 1000 bis 5000, und geeignete Polyoxytetramethylenglykole ein Molekulargewicht bis ungefähr 3500.
   Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 1111394, 1222669 (US-A-3 304 273, 3 383 351, 3 523 093), 1 152 536 (GB 1 040 452) und 152 537 (GB 987 618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B-011752 (US-A-4304708), US-A-4374209 und DE-A-3231497.
   Die Polyetherpolyole können ebenso wie die Polyesterpolyole einzeln oder in Form von Mischungen verwendet werden. Ferner können sie mit den Pfropfpolyether-polyolen oder Polyesterpolyolen sowie den hydroxylgruppenhaltigen Polyesteramiden, Polyacetalen, Polycarbonaten und/oder Polyetherpolyaminen gemischt werden.
   Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.
   Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.
   Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.
   Geeignete Polyetherpolyamine können aus den obengenannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US-A-3 267 050) oder die teilweise oder vollständige Aminierung von Polyoxyalkylenpolyolen mit Aminen oder Ammoniak in Gegenwart von Wasserstoff und Katalysatoren (DE-A-12 15 373).
c) Die erfindungsgemäßen Polyurethanschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.
   Sofern zur Herstellung der Polyurethanschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 1 bis 8 Gew.-%, bezogen auf das Gewicht der Komponente (b) zum Einsatz.
d) Als Treibmittel können die aus der Polyurethanchemie allgemein bekannten Fluorchlorkohlenwasserstoffe (FCKW) sowie hoch- und/oder perfluorierte Kohlenwasserstoffe verwendet werden. Der Einsatz dieser Stoffe wird jedoch aus ökologischen Gründen stark eingeschränkt bzw. ganz eingestellt. Neben den HFCKW und HFKW bieten sich insbesondere aliphatische und/oder cycloaliphatische Kohlenwasserstoffe, insbesondere Pentan und Cyclopentan, oder Acetale, wie z. B. Methylat, als Alternativtreibmittel an.
   Diese physikalischen Treibmittel werden üblicherweise der Polyolkomponente des Systems zugesetzt. Sie können jedoch auch in der Isocyanatkomponete oder als Kombination sowohl der Polyolkomponente als auch der Isocyanatkomponente zugesetzt werden.
   Möglich ist auch ihre Verwendung, zusammen mit hoch- und/oder perfluorierten Kohlenwasserstoffen, in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.-% aufweisen. Derartige Produkte sind aus der Kunststoffchemie hinreichend bekannt, z.B. EP-A-0 351 614.
   Die eingesetzte Menge des Treibmittels bzw. der Treibmittelmischung liegt dabei bei 1 bis 25 Gew.-%, vorzugsweise 1 bis 15 Gew.-%, jeweils bezogen auf die Komponente (b).
   Weiterhin ist es möglich und üblich, als Treibmittel der Aufbaukomponente (b) Wasser in einer Menge von 0,5 bis 15 Gew.-%, vorzugsweise 1 bis 5 Gew.-%, bezogen auf die Komponente (b), zuzusetzen. Der Wasserzusatz kann in Kombination mit dem Einsatz der anderen beschriebenen Treibmittel erfolgen.
e) Als Katalysatoren zur Herstellung der erfindungsgemäßen Polyurethanschaumstoffe werden die in der Polyurethanchemie üblichen Katalysatoren eingesetzt. Insbesondere werden Verbindungen verwendet, die die Reaktion der reaktive Wasserstoffatome, insbesondere Hydroxylgruppen, enthaltenden Verbindungen der Komponenten (b) und gegebenenfalls (c) mit den organischen, gegebenenfalls modifizierten organischen Isocyanaten (a) stark beschleunigen. In Betracht kommen organische Metallverbindungen, wie Eisen(II)-chlorid, Zinkchlorid, Bleioctoat und vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat, und Dialkylzinn-(IV)-salze von organischen Carbonsäuren, z.B. Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Alkanolverbindungen, wie Triethanolamin, Triisopropanolamin, N-Methyl- und N-Ethyldiethanolamin und Dimethylethanolamin. Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.
   Vorzugsweise verwendet werden 0,001 bis 5 Gew.-%, insbesondere 0,05 bis 2 Gew.-%, Katalysator bzw. Katalysatorkombination, bezogen auf das Gewicht der Aufbaukomponente (b).
f) Erfindungsgemäß wird zur Herstellung der flammgeschützten Polyurethanschaumstoffe als Flammschutzmittel Melamin in Verbindung mit mindestens einem Amin sowie mindestens einem organischen und/oder modifizierten organischen Isocyanat, wie weiter oben beschrieben, eingesetzt. Das Melamin liegt dabei als stabile Dispersion in der Polyolkomponente, bestehend aus den Komponenten (b) und gegebenenfalls (c), (d), (e), weiteren Flammschutzmitteln (f) und (g) vor.
   Vorzugsweise wird zur Flammfestmachung der Polyurethanschaumstoffe ausschließlich die beschriebene Flammschutzmittelkombination eingesetzt. Natürlich können auch Anteile an weiteren Flammschutzmitteln mitverwendet werden.
   Falls weitere Flammschutzmittel eingesetzt werden, eignen sich hierfür beispielsweise Tris-(2-chlorethyl)phosphat, Tris-(2-chlorpropyl)phosphat, Tetrakis-(2-chlorethyl)-ethylendiphosphat, Dimethylmethanphosphonat, Diethanolaminomethylphosphonsäurediethylester sowie handelsübliche halogen-haltige Flammschutzpolyole. Außer den genannten halogensubstituierten Phosphaten können auch anorganische oder organische Flammschutzmittel, wie roter Phosphor, Aliumiumoxidhydrat, Ammoniumpolyphosphat und Calciumsulfat, Blähgraphit oder Cyanursäurederivate.
   Im allgemeinen hat es sich als zweckmäßig erwiesen, 1 bis 40 Gew.-Teile der genannten Flammschutzmittel für jeweils 100 Gew.-Teile der Aufbaukomponente (b) zu verwenden.
g) Der Reaktionsmischung zur Herstellung der Polyurethanschaumstoffe können gegebenenfalls noch weitere Hilfsmittel und/ oder Zusatzstoffe einverleibt werden. Genannt seien beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.
   Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze der Ricinusölsulfate, oder von Fettsäuren sowie Salzen von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure, Schaumstabilisatoren, wie Siloxanoxalkylenmischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/ oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Aufbaukomponente (b) angewandt.
   Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe, wie silikatische Mineralien, beispielsweise Schichtsilikate, wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cycalopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern.
   Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt, wobei jedoch der Gehalt an Matten, Vliesen und Geweben aus natürlichen und synthetischen Fasern Werte bis 80 erreichen kann.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoffhandbuch, Polyurethane, Band VII, Hanser-Verlag München, Wien, 1., 2. und 3. Auflage, 1966, 1983 und 1993 zu entnehmen.

Zur Herstellung der Polyurethanschaumstoffe werden die organischen und/oder modifizierten organischen Isocyanate (a), höhermolekularen Verbindungen mit mindestens zwei reaktiven Wasserstoffatomen (b) und gegebenenfalls Kettenverlängerungs- und/oder Vernetzungsmitteln (c) in solchen Mengen zur Umsetzung gebracht, daß das Äquivalenzverhältnis von NCO-Gruppen der Isocyanate (a) zur Summe der reaktiven Wasserstoffatome der Komponenten (b) und gegebenenfalls (c) 0,80 bis 1,25:1, vorzugsweise 0,90 bis 1,15:1, beträgt.

Die Polyurethanschaumstoffe werden vorteilhafterweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt. Üblich ist auch die kontinuierliche Auftragung des Reaktionsgemisches auf geeigneten Bandstraßen zur Erzeugung von Schaumblöcken.

Als besonders vorteilhaft hat es sich erwiesen, nach dem Zweikomponentenverfahren zu arbeiten und die erfindungsgemäße stabile Melamindispersion, bestehend aus den Komponenten (b) und gegebenenfalls (c), (d), (e), weiteren Flammschutzmitteln (f) und (g), sowie gegebenenfalls weiteren höhermolekularen Verbindungen mit mindestens zwei reaktiven Wasserstoffatomen (b), niedermolekularen Kettenverlängerungs- und/oder Vernetzungsmitteln (c), Treibmitteln (d), Katalysatoren (e), Flammschutzmitteln (f) und Hilfsmitteln und/oder Zusatzstoffen (g) in der Komponente (A) zu vereinigen und als Komponente (B) die organischen und/oder modifizierten organischen Isocyanate (a), gegebenenfalls im Gemisch mit weiteren Flammschutzmitteln (f) und Hilfsmitteln und/oder Zusatzstoffen (g), zu verwenden.

Die Komponenten (A) und (B) werden bei einer Temperatur von 15 bis 90°C, vorzugsweise von 20 bis 60°C und insbesondere von 20 bis 40°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers, mittels einer Rührschnecke oder durch eine Hochdruckvermischung in einer Düse durchgeführt werden. Die Formwerkzeugtemperatur beträgt zweckmäßigerweise 20 bis 110°C, vorzugsweise 30 bis 70°C und insbesondere 35 bis 55°C.

Die nach dem erfindungsgemäßen Verfahren hergestellten Polyurethanschaumstoffe weisen eine Dichte von10 bis 800 kg/m³, vorzugsweise von 35 bis 100 kg/m³ und insbesondere von 25 bis 80 kg/m³, auf. Besonders eignen sie sich als Polstermaterial im Möbel- und Automobilbereich, insbesondere zur Herstellung von Fahrzeugsitzen. Sie können auch als flexibles Dichtungsmaterial im Bauwesen Verwendung finden. Bei entsprechend höheren Rohdichten sind sie ebenfalls als Integralschaumteil im Fahrzeugsicherheitsbereich einsetzbar.

Die vorliegende Erfindung soll anhand der nachstehenden Beispiele näher erläutert werden.

### Beispiel 1 - Vergleichsbeispiel

100 Gew.-Teile (GT) einer A-Komponente, bestehend aus

| Bestandteil | GT |
|---|---|
| Lupranol® 2045 | 64,55 |
| Lupranol® 2030 | 6,20 |
| Lupranol® 2047 | 5,00 |
| Lupragen® N211 | 0,30 |
| Lupragen® N201 | 0,20 |
| VP 9199 | 0,45 |
| B 8680 | 0,20 |
| Systol® T 131 | 5,00 |
| Wasser | 3,10 |
| Melamin | 15,00 |

Lupranol® 2045 - OHZ 35 mg KOH/g, Polyether auf Basis Ethylenoxid und Propylenoxid (BASF); Lupranol® 2030 - OHZ 55 mg KOH/g, Polyether auf Basis Ethylenoxid und Propylenoxid (BASF); Lupranol® 2047- OHZ 42 mg KOH/g, Polyether auf Basis Ethylenoxid und Propylenoxid (BASF); Lupragen® N211, N201, VP 9199 - Aminkatalysatoren (BASF); B 8680 - Silikonstabilisator (Goldschmidt); Systol® T 131 - phosphorhaltiges Flammschutzmittel (BASF); Melamin, Korngröße 10-50 µm (90%) (BASF),
wurden mit 61 GT eines NCO-gruppenhaltigen Prepolymeren auf Basis von Lupranat® MES, Lupranat® MI und Lupranat® M20A (NCO-Gehalt: 27,0 Gew.- %) zu einem Polyurethanweichschaum umgesetzt (Tabelle 1).
- Lupranat® MES:: 4,4'-Diphenylmethandiisocyanat,
- Lupranat® MI:: Gemisch aus 2,4'- und 4,4'-Diphenylmethandiisocyanat
- Lupranat® M20A:: Polyphenylpolyisocyanat

### Beispiel 2

96,6 GT einer Komponente, bestehend aus

| Bestandteil | GT |
|---|---|
| Lupranol® 2045 | 64,55 |
| Lupranol® 2030 | 6,20 |
| Lupranol® 2047 | 5,00 |
| Lupragen® N201 | 0,20 |
| VP 9199 | 0,45 |
| B 8680 | 0,20 |
| Systol® T 131 | 5,00 |
| Melamin | 15,00 |

wurden 0,5 GT 2,2'-Dimethyl-4,4'-methylenbiscyclohexylamin zugesetzt. Unter Rühren wurden 0,6 GT Lupranat® M20A hinzugegeben und 10 Minuten verrührt. Nach 30 Minuten erfolgte die Konfektionierung der Komponente durch Zugabe von 3,1 GT Wasser und 0,3 GT Lupranol® N211. Mit 61 GT des NCO-Prepolymeren gemäß Beispiel 1 wurde ein Polyurethanweichschaum erzeugt (Tabelle 1).

### Beispiel 3

96,6 GT einer Komponente, bestehend aus

| Bestandteil | GT |
|---|---|
| Lupranol® 2045 | 65,55 |
| Lupranol® 2030 | 6,20 |
| Lupranol® 2047 | 4,00 |
| Lupragen® N201 | 0,20 |
| VP 9199 | 0,45 |
| B 8680 | 0,20 |
| Systol® T 131 | 5,00 |
| Melamin | 15,00 |

wurden 0,4 GT Ethylendiamin zugesetzt. Unter Rühren wurden 0,7 GT Lupranat® M20 A zugegeben. Nach 10 minütigem Rühren wurden 3,1 GT Wasser und 0,3 GT Lupragen® N211 hinzugefügt und weitere 10 Minuten gerührt.

Mit 61 GT eines NCO-gruppenhaltigen Prepolymeren gemäß Beispiel 1 wurde ein Polyurethanweichschaum erzeugt (Tabelle 1).

### Beispiel 4

91,8 GT einer Komponente, bestehend aus

| Bestandteil | GT |
|---|---|
| Lupranol® 2045 | 71,55 |
| Glyzerin | 1,20 |
| Lupranol® 2047 | 3,00 |
| Lupragen® N201 | 0,20 |
| VP 9199 | 0,45 |
| B 8680 | 0,40 |
| Melamin | 15,00 |

wurden 0,5 GT Diaminocyclohexan zugesetzt. Dazu gab man unter Rühren 0,8 GT Lupranat® M20A, gelöst in 5 GT Systol® T 131. Diese Mischung wurde zur Vervollständigung der Umsetzung 10 Minuten gerührt. Danach verrührte man 3,1 GT Wasser und 0,1 GT Lupragen® N211.

Mit 66,8 GT eines NCO-gruppenhaltigen-Prepolymeren gemäß Beispiel 1 wurde ein Polyurethanweichschaum erzeugt (Tabelle 1).

### Beispiel 5

96,6 GT einer Komponente, bestehend aus

| Bestandteil | GT |
|---|---|
| Lupranol® 2045 | 66,55 |
| Lupranol® 2030 | 6,20 |
| Lupranol® 2047 | 3,00 |
| Lupragen® N201 | 0,20 |
| VP 9199 | 0,45 |
| B 8680 | 0,20 |
| Systol® T 131 | 5,00 |
| Melamin | 15,00 |

wurden 0,5 GT 2,2'-Dimethyl-4,4'-methylenbiscyclohexylamin und 0,1 GT Diethanolamin zugesetzt. Unter Rühren wurden 0,9 GT Lupranat® M20A hinzugegeben. Nach 10-minütigem Rühren wurden 3,1 GT Wasser und 0,3 GT Lupragen® N211 hinzugefügt. Es wurde weitere 10 Minuten gerührt.

Mit 61,2 GT eines NCO-gruppenhaltigen Prepolymeren gemäß Beispiel 1 wurde ein Polyurethanschaum erzeugt (Tabelle 1).

### Beispiel 6

97,2 GT einer Komponente, bestehend aus

| Bestandteil | GT |
|---|---|
| Lupranol® 2045 | 69,80 |
| Lupranol® 2047 | 1,00 |
| Polycat® 12 | 0,40 |
| Dabco® | 0,20 |
| B 8701 | 0,30 |
| Systol® T 131 | 5,50 |
| Melamin | 20,00 |

Polycat 12® , Dabco® - Aminkatalysatoren (Air Products)
wurden mit 0,25 GT 2,2'-Dimethyl-4,4'-methylenbiscyclohexylamin versetzt und intensiv vermischt. Nach Zugabe von 0,19 GT Toluylendiisocyanat (TP 80) wurde 10 Minuten gerührt. Nach 30 Minuten erfolgte die Zugabe von 2,8 GT Wasser. Mit 55 GT des NCO-Prepolymeren gemäß Beispiel 1 wurde ein Polyurethanweichschaum erzeugt (Tabelle 1).

### Beispiel 7

97,2 GT der polyolischen Komponente aus Beispiel 6 wurden mit 0,25 GT 2,2'-Dimethyl-4,4'-methylenbiscyclohexylamin versetzt und intensiv vermischt. Nach Zugabe von 0,4 GT eines NCO-gruppenhaltigen Prepolymeren gemäß Beispiel 1 wurde 10 Minuten gerührt. Nach 30 Minuten erfolgte die Zugabe von 2,8 GT Wasser. Die so erhaltene Komponente wurde mit 55 GT des NCO-Prepolymeren gemäß Beispiel 1 zu einem Polyurethanweichschaum umgesetzt (Tabelle 1).

In Tabelle 1 wurden die Lagerstabilität der A-Komponenten sowie das Brandverhalten der erhaltenen Weichschäume miteinander verglichen.

**Tabelle 1**

| Charakterisierung der A-Komponente und des Brandverhaltens | | | | | | | |
|---|---|---|---|---|---|---|---|
| Kennwert | Bsp. 1 | Bsp. 2 | Bsp. 3 | Bsp. 4 | Bsp. 5 | Bsp. 6 | Bsp. 7 |
| Lagerstabil. (Tage) | 1 | >90 | >90 | >90 | >90 | >90 | >90 |
| Brandverh. *) | + | + | + | + | + | + | + |

| | | | | | | | |
|---|---|---|---|---|---|---|---|
| *) Crib 5: British Standard 5852 part 2 (+ = bestanden) | | | | | | | |

### Beispiel 8

70 GT Lupranol® 2045, 30 GT Melamin, 0,05 GT Dimethylethanolamin und 0,5 GT 2,2'-Dimethyl-4,4'-methylenbiscyclohexylamin wurden 15 Minuten miteinander verrührt. Anschließend erfolgte der tropfenweise Zusatz von 0,54 GT Lupranat® MI bei einer Rührgeschwindigkeit von 1800 U/min. Das Gemisch wurde 15 Minuten bei Raumtemperatur verrührt. Der so hergestellte Melaminbatch (30 Gew.-% Melamin im Polyol) war hinreichend lagerstabil (> 45 Tage*) und konnte vor der Verarbeitung zu einer Komponente abgemischt werden.
* länger nicht geprüft

## Patentansprüche

1. Verfahren zur Herstellung einer stabilen Dispersion von Melamin in Polyolkomponenten, bestehend aus mindestens einer höhermolekularen Verbindung mit mindestens zwei reaktiven Wasserstoffatomen und gegebenenfalls niedermolekularen Kettenverlängerungs- und/oder Vernetzungsmitteln, Treibmitteln, Katalysatoren, Flammschutzmitteln sowie weiteren Hilfsmitteln und/oder Zusatzstoffen,
**dadurch gekennzeichnet, daß** als Flammschutzmittel Melamin mit einer durchschnittlichen Korngröße von 1 bis 100 µm und einer Korngrößenverteilung, bei der mindestens 70 Gew.-% der Teilchen eine Korngröße von mehr als 16 µm aufweisen, in Verbindung mit mindestens einem Amin in Anteilen von 0,05 bis 2 Gew.-% sowie mindestens einem organischen und/oder modifizierten organischen Isocyanat in Anteilen von 0,05 bis 2 Gew.-%, jeweils bezogen auf das Gewicht der Polyolkomponente, eingesetzt wird.

2. Verfahren gemäß Anspruch 1, **dadurch gekennzeichnet, daß** als Flammschutzmittel Melamin zugegeben, danach mindestens ein Amin zugemischt und anschließend mindestens ein organisches und/oder modifiziertes organisches Isocyanat eingebracht wird.

3. Verfahren nach Anspruch 1 oder 2, **dadurch gekennzeichnet, daß** der Melaminanteil in der Polyolkomponente 1 bis 50 Gew.-% beträgt.

4. Verfahren nach einem der Ansprüche 1 bis 3, **dadurch gekennzeichnet, daß** als Amine primäre und/oder sekundäre Amine eingesetzt werden.

5. Verfahren nach einem der Ansprüche 1 bis 4, **dadurch gekennzeichnet, daß** als Amine aliphatische und/oder cycloaliphatische Amine eingesetzt werden.

6. Verfahren nach einem der Ansprüche 1 bis 5, **dadurch gekennzeichnet, daß** als organische und/oder modifizierte organische lsocyanate aromatische 1socyanate eingesetzt werden.

7. Verfahren nach einem der Ansprüche 1 bis 5, **dadurch gekennzeichnet, daß** als organische und/oder modifizierte organische Isocyanate NCO-Gruppen enthaltende Prepolymere eingesetzt werden.

8. Verfahren zur Herstellung flammgeschützter Polyurethanschaumstoffe durch Umsetzung von
a) organischen und/oder modifizierten organischen Isocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) Flammschutzmitteln sowie gegebenenfalls
g) weiteren Hilfsmitteln und/oder Zusatzstoffen,
**dadurch gekennzeichnet, daß** als Flammschutzmittel Melamin als stabile Dispersion, herstellbar nach einem der Ansprüche 1 bis 7, eingesetzt wird.

9. Verwendung der nach Anspruch 8 hergestellten Polyurethanschaumstoffe als Weichschaum für Polsterzwecke im Möbel- und Automobilbereich sowie für Dichtungen im Bauwesen.

10. Verwendung der nach Anspruch 8 hergestellten Polyurethanschaumstoffe als Bestandteil von Integralschaumstoffen.

## Claims

1. A process for preparing a stable dispersion of melamine in polyol components comprising at least one relatively high molecular weight compound containing at least two reactive hydrogen atoms and, if desired, low molecular weight chain extenders and/or crosslinkers, blowing agents, catalysts, flame retardants and also further auxiliaries and/or additives,
wherein use is made as flame retardant of melamine having an average particle size of from 1 to 100 µm and a particle size distribution in which at least 70% by weight of the particles have a particle size of more than 16 µm in combination with at least one amine in amounts of from 0.05 to 2% by weight and at least one organic and/or modified organic isocyanate in amounts of from 0.05 to 2% by weight, based in each case on the weight of the polyol component.

2. A process as claimed in claim 1, wherein, as flame retardant, melamine is added, then at least one amine is mixed in and subsequently at least one organic and/or modified organic. isocyanate is introduced.

3. A process as claimed in claim 1 or 2, wherein the proportion of melamine in the polyol component is from 1 to 50 % by weight.

4. A process as claimed in any of claims 1 to 3, wherein the amines used are primary and/or secondary amines.

5. A process as claimed in any of claims 1 to 4, wherein the amines used are aliphatic and/or cycloaliphatic amines.

6. A process as claimed in any of claims 1 to 5, wherein the organic and/or modified organic isocyanates are aromatic isocyanates.

7. A process as claimed in any of claims 1 to 5, wherein the organic and/or modified organic isocyanates are prepolymers containing NCO groups.

8. A process for producing flame-resistant polyurethane foams by reacting
a) organic and/or modified organic isocyanates with
b) at least one relatively high molecular weight compound containing at least two reactive hydrogen atoms and, if desired,
c) low molecular weight chain extenders and/or crosslinkers
in the presence of
d) blowing agents,
e) catalysts,
f) flame retardants and, if desired,
g) further auxiliaries and/or additives,
wherein use is made as flame retardant of melamine as a stable dispersion which can be prepared as claimed in any of claims 1 to 7.

9. Use of the polyurethane foams produced as claimed in claim 8 as flexible foam for upholstery purposes in the furniture and automobile sectors and for seals in the building industry.

10. Use of the polyurethane foams produced as claimed in claim 8 as a constituent of integral foams.

## Revendications

1. Procédé pour la préparation d'une dispersion stable de mélamine dans des composants de polyols, constituée par au moins un composé à poids moléculaire élevé comprenant au moins deux atomes d'hydrogène réactifs et le cas échéant des agents d'allongement de chaînes et/ou des agents de réticulation à bas poids moléculaire, des agents de transformation en mousse, des catalyseurs, des agents ignifuges, ainsi que d'autres adjuvants et/ou additifs, **caractérisé en ce qu'**on met en oeuvre, à titre d'agent ignifuge de la mélamine possédant une granulométrie moyenne de 1 à 100 µm et une distribution granulométrique dans laquelle au moins 70 % en poids des particules présentent une granulométrie supérieure à 16 µm, en liaison avec au moins une amine dans des fractions de 0,05 à 2 % en poids, et avec au moins un isocyanate organique et/ou organique modifié dans des fractions de 0,05 à 2 % en poids, chaque fois rapportée au poids du composant de polyol.

2. Procédé selon la revendication 1, **caractérisé en ce qu'**on ajoute de la mélamine à titre d'agent ignifuge; on ajoute ensuite par mélange au moins une amine et on introduit ensuite au moins un isocyanate organique et/ou organique modifié.

3. Procédé selon la revendication 1 ou 2, **caractérisé en ce que** la fraction de mélamine dans le composant de polyol s'élève de 1 à 50 % en poids.

4. Procédé selon l'une quelconque des revendications 1 à 3, **caractérisé en ce qu'**on met en oeuvre à titre d'amines, des amines primaires et/ou secondaires.

5. Procédé selon l'une quelconque des revendications 1 à 4, **caractérisé en ce qu'**on met en oeuvre à titre d'amines, des amines aliphatiques et/ou cycloaliphatiques.

6. Procédé selon l'une quelconque des revendications 1 à 5, **caractérisé en ce qu'**on en met en oeuvre à titre d'isocyanates organiques et/ou organiques modifiés, des isocyanates aromatiques.

7. Procédé selon l'une quelconque des revendications 1 à 5, **caractérisé en ce qu'**on en met en oeuvre à titre d'isocyanates organiques et/ou organiques modifiés, des prépolymères contenant des groupes NCO.

8. Procédé pour la préparation de mousses de polyuréthanne rendues ignifuges par mise en réaction de
a) des isocyanates organiques et/ou organiques modifiés avec
b) au moins un composé à poids moléculaire élevé comprenant au moins deux atomes d'hydrogène réactifs, et le cas échéant
c) des agents d'allongement de chaînes et/ou des agents de réticulation à bas poids moléculaire,
en présence de
d) des agents de transformation en mousse,
e) des catalyseurs,
f) des agents ignifuges, ainsi que le cas échéant
g) d'autres adjuvants et/ou additifs,
**caractérisé en ce qu'**on met en oeuvre à titre d'agent ignifuge, de la mélamine sous forme d'une dispersion stable que l'on peut préparer conformément à l'une quelconque des revendications 1 à 7.

9. Utilisation des mousses de polyuréthanne préparées conformément à la revendication 8 à titre de mousse souple pour des objets de rembourrage dans le domaine du mobilier et de la construction automobile, ainsi que pour des joints d'étanchéité dans le bâtiment.

10. Utilisation des mousses de polyuréthanne préparées conformément à la revendication 8, à titre de constituant de mousses à peau intégrée.
